# EUROPÄISCHE PATENTSCHRIFT

(11) **EP 3 180 112 B1**
(45) Veröffentlichungstag und Bekanntmachung des Hinweises auf die Patenterteilung: **24.10.2018**
(21) Anmeldenummer: 15757164.7
(22) Anmeldetag: 12.08.2015
(51) Int. Cl.: B01D 65/08, B01D 67/00

(54) **VERFAHREN ZUR HERSTELLUNG VON ANTIFOULING-BESCHICHTUNGEN VON DÜNNSCHICHTKOMPOSITMEMBRANEN FÜR DIE UMKEHROSMOSE UND DIE NANOFILTRATION, DERARTIGE DÜNNSCHICHTKOMPOSITMEMBRANEN UND DEREN VERWENDUNG**
METHOD FOR THE PREPARATION OF ANTI-FOULING COATINGS OF THIN FILM COMPOSITE MEMBRANES FOR REVERSE OSMOSIS AND NANOFILTRATION, SUCH THIN FILM COMPOSITE MEMBRANES AND THEIR USE
PROCÉDÉ DE FABRICATION DE REVÊTEMENTS ANTISALISSURE DE MEMBRANES COMPOSITES À FINE COUCHE POUR L'OSMOSE INVERSE ET LA NANOFILTRATION, MEMBRANES COMPOSITES À COUCHE FINE ET LEUR UTILISATION

(30) Priorität: 13.08.2014 EP 14180835
(43) Veröffentlichungstag der Anmeldung: 21.06.2017
(73) Patentinhaber: Fraunhofer-Gesellschaft zur Förderung der angewandten Forschung e.V., 80686 München (DE); Iab Ionenaustauscher GmbH, 06803 Bitterfeld-Wolfen (DE)
(72) Erfinder: SPOHN, Uwe, 06120 Halle (DE); HIRSCH, Ulrike, 06108 Halle (DE); RÜHL, Marco, 06749 Bitterfeld-Wolfen (DE); TEUSCHER, Nico, 06114 Halle (DE); HEILMANN, Andreas, 09573 Augustusburg (DE); SCHELLENBERG, Carsten, Leipzig 04105 (DE)
(74) Vertreter: Pfenning, Meinig & Partner mbB
(86) Internationale Anmeldenummer: PCT/EP2015/068585
(87) Internationale Veröffentlichungsnummer: WO 2016/023956

(56) Entgegenhaltungen:
- WO-A2-92/15637
- US-A1- 2009 162 662
- US-A1- 2009 308 804
- SAEKI DAISUKE ET AL: "Anti-biofouling of polyamide reverse osmosis membranes using phosphorylcholine polymer grafted by surface-initiated atom transfer radical polymerization", DESALINATION, Bd. 350, 19. Juli 2014 (2014-07-19), Seiten 21-27, XP029017661, ISSN: 0011-9164, DOI: 10.1016/J.DESAL.2014.07.004

## Beschreibung

Die Erfindung betrifft ein kombiniertes Verfahren zur schonenden molekularen Oberflächenfunktionalisierung der sehr dünnen, selektiv wirkenden Trennschicht,die vorzugsweise aus aromatischen Polyamiden, Polyurethanen und/oder Polyharnstoffen besteht, von Dünnschichtkompositmembranen für die Umkehrosmose (Hyperfiltration) und für die Nanofiltration, zusammenfassend im weiteren als Wasserfiltrationsmembranen bezeichnet, um eine passive Antifoulingwirkung zu erzielen, ohne die Selektivität der wasserselektiven Trennschicht aus Polyamiden und die Wasserpermeabilität der Membran zu beeinträchtigen.

Membranbasierte Prozesse zur Wasseraufbereitung, z. B. bei der Trinkwassererzeugung, Brauchwasserbereitstellung und Abwasserreinigung oder auch in der Lebensmittel- und Biotechnologie arbeiten in den meisten Fällen insteril oder monoseptisch. Anwesende Mikroorganismen und begleitende Biopolymere *verursachen* die Bildung *von* Biofilmen, die sich auf den Membranen und in deren Poren absetzen. Durch das dadurch verursachte Biofouling kommt es zu einer Verringerung des Permeatstromes, der Trennselektivität und oft zur Ansiedlung resistenter, u.U. auch pathogener Keime, deren vollständige Abtötung (Desinfektion) einen intensiven Einsatz von Desinfektionsmitteln oder Antibiotika erfordert. Die Abscheidung von Biopolymeren, wie Proteinen, Polysacchariden und Nukleinsäuren begünstigt die Ausbildung mikrobieller Biofilme und sollte möglichst ausgeschaltet oder so weit wie möglich minimiert werden. Alle Antifoulingbeschichtungen und -funktionalisierungen müssen die technische Funktion der Membran erhalten. Dies ist z.B. besonders bei Trennmembranen, insbesondere von Dünnschichtkompositmembranen für die Umkehrosmose eine schwer zu realisierende technische Herausforderung. Weiterhin ist gefordert, dass alle Antifoulingmaßnahmen sich in bestehende Herstellungs- und Anlagenkonzepte integrieren lassen.

In der technischen Praxis wird das Problem des Membranfoulings, insbesondere des Biofoulings durch mechanische Reinigung, Waschen, chemische Desinfektion sowie chemische und Heißdampfsterilisation gelöst. Derzeit favorisiert sind Antifoulingmaßnahmen, die eine Vorfiltration (Mikro- und Ultrafiltration), eine Nährstoffabreicherung (Flokkulation u.a.) und eine chemische Membranreinigung durch abwechselnde Behandlung mit sauren und alkalischen Lösungen und mit wässrigen Lösungen von Chlor, gebundenem Aktivchlor oder Hypochlorit, im folgenden kurz Chlorlösungen kombinieren. Die weit verbreitete, auf Grund der Aufrauhung der selektiven Trennschicht auf Umkehrosmosemembranen während der Gesamtbetriebszeit immer häufiger werdende Anwendung von Chlorlösungen führt letztlich zur Zerstörung der Trennmembran. Alle diese Vorgehensweisen erfordern in den meisten Fällen eine mehr oder weniger lange Unterbrechung der technischen Prozesse, einen hohen Einsatz von Desinfektions- und Reinigungsmitteln, Antibiotika, Energie und Zeit. Letztendlich müssen die Trennmembranen nach deutlich verkürzter Prozesszeit ausgewechselt werden. Bisher bekannte Modifikationen der Membranoberflächen durch nasschemische Verfahren führen zwar zu einer Inhibierung des zum Biofouling führenden Mikroorganismenbewuchses, zu einer Verringerung der Mikroorganismenadhäsion und zu einer Verringerung der Adsorption von Biopolymeren, nicht jedoch zu einer völligen Ausschaltung des Biofoulings. Hydrolyse-, säure-, alkali- und oxidativ empfindliche Membranschichten, z.B. in den bei der Umkehrosmose und der Gewinnung entsalzten Wassers aus Brack- und Meerwasser überwiegend angewendeten Dünnschichtkompositmembranen, können nasschemisch nicht ohne starke Veränderungen der Membraneigenschaften oder nur mit großen Einschränkungen in einer reaktiven Lösungsmittelphase modifiziert werden.

Um Membranen mit Antifoulingeigenschaften herzustellen kann auch die kontrollierte lebende Pfropfpolymerisation eingesetzt werden. Die kontrollierte lebende Pfropfpolymerisation, die an in die Membransubstanz einpolymerisierten Initialisierungsgruppen beginnt, wie z.B. bei der radikalischen Additions-Fragmentierungs-Kettentransfer-Polymerisation (RAFT), die radikalische Atomtransferpolymerisation an Brom- und Chloralkylgruppen und der durch Nitroxidgruppen vermittelten radikalischen Pfropfpolymerisation ist aus WO2010/015599 A1, CA 2,732,873 A1, CN 102112214A, EP 2 313 184 A1, EP 2 313 184 B1, US 8,544,658 B1, US 2011/0189469 A1 bekannt. Der Nachteil der kontrolliert lebenden Pfropfpolymerisation auf nasschemisch vorbehandelten Membranoberflächen besteht in der zu erwartenden stark veränderten Trennleistung und Permeabilität von Dünnschichtkompositmembranen für die Umkehrosmose. US2009/308804 offenbart eine Antifouling-Beschichtung für eine Umkehrosmosemembran, wobei zunächst eine Plasma-Aktivierung der Membranoberfläche erfolgt (ohne Zugabe besonderer Chemikalien) und dann eine nasschemische Pfropfpolymerisation mit Methacrylsäure.

Ausgehend hiervon war es Aufgabe der vorliegenden Erfindung ein Verfahren zur Herstellung von Antifouling-Beschichtungen von Membranen bereitzustellen, ohne dass die Selektivität und die Wasserpermeabilität der Membran beeinträchtigt wird.
Diese Aufgabe wird durch das Verfahren mit den Merkmalen des Anspruchs 1 und die Dünnschichtkompositmembran mit den Merkmalen des Anspruchs 10 gelöst. Im Anspruch 15 werden erfindungsgemäße Verwendungen angegeben. Die weiteren abhängigen Ansprüche zeigen vorteilhafte Weiterbildungen auf.
Erfindungsgemäß wird ein Verfahren zur Herstellung von Antifouling-Beschichtungen von Membranen bereitgestellt, bei dem
- in einem ersten Schritt eine primäre molekulare Funktionalisierung der Membran in der Gasphase durch plasmachemische Aktivierung, d.h. einer Aktivierung im elektrischen Gleichspannungs- oder Wechselspannungsfeld, und/oder photochemische Aktivierung mindestens einer in die Gasphase überführbaren halogenorganischen Verbindung und deren kovalenten Anbindung an der Membranoberfläche über die Halogengruppen und
- in einem zweiten Schritt eine nasschemische Modifizierung der mit HaIogenatomen derivatisierten Molekülgruppen funktionalisierten Membran mittels radikalischer Pfropfpolymerisation erfolgt.
Bei dem erfindungsgemäßen Verfahren werden die Verbindungen wie in Anspruch 1 definiert verwendet.

Die nasschemische Modifizierung läuft in flüssiger Phase, vorzugsweise in wässrig-alkoholischer und alkoholischer Lösung ab. Das erfindungsgemäße Verfahren ermöglicht so die Herstellung von Wasserfiltrationsmembran mit verbesserten Antifouling-Eigenschaften durch die chemisch abgestimmte Kombination einer molekularen Funktionalisierung der Membranoberfläche durch Gasphasenreaktion mit einer radikalischen Pfropfpolymerisation in der Flüssigphase.
Die schonende, die Membranfunktion erhaltende molekulare Funktionalisierung der Membranoberfläche, z.B. durch die Einführung halogenhaltiger Molekülgruppen durch einen Plasmaprozess, wird dabei chemisch an die später ablaufende Polymerisationsreaktion angepasst. Die eigentliche Antifoulingwirkung wird durch die feste Verankerung ausreichend dicht angeordneter und wirksamer chemischen Gruppen durch Propfpolymerisation erreicht.

Für die molekulare Funktionalisierung in der Gasphase werden halogenorganische Verbindungen ausgewählt aus der Gruppe bestehend aus Allylhalogeniden, C₁- bis C₈-Alkylenhalogeniden, bevorzugt C₁- bis C₄-Alkylenhalogeniden, insbesondere Methylenhalogeniden, C₁- bis C₈-Alkylhalogeniden, bevorzugt C₁- bis C₄- Alkylhalogeniden, insbesondere Methylhalogeniden und Mischungen hiervon. Besonders bevorzugt sind Propylbromid, Ethylbromid, Allylbromid, Allylchlorid, Methylenbromid, Methylenchlorid, Methylbromid, Methylchlorid sowie Mischungen hiervon. Dabei wurde überraschenderweise festgestellt, dass durch die Verwendung der halogenorganischen Verbindungen und deren Abscheidung aus der Gasphase eine sehr schonende Modifikation der empfindlichen Membranschichten möglich ist. Die plasmachemische und/oder photolytische Aktivierung unter Beibehaltung der chemisch zu derivatisierenden funktionellen Gruppen führt zur Abscheidung dieser auf der Membran. Die kovalente Anbindung der halogenorganischen Verbindung erfolgt dabei über die organischen Reste, vorzugsweise über Alkylenbrücken, insbesondere Methylen-, Ethylen- und Propylengruppen.

Die Menge der auf der Oberfläche der zu modifizierenden Membran zu bindenden halogenorganischen, funktionellen Gruppen beträgt im Allgemeinen zwischen 0,01 und 5 pro Quadratnanometer, bevorzugt zwischen 0,1 und 2 pro Quadratnanometer.

Es ist weiter bevorzugt, dass die Halogenatome der halogenorganischen Verbindungen photochemisch oder katalytisch, insbesondere mit Cu(I)-Komplexen, Cu(II)-Komplexen oder Ru(III)-Komplexen, unter Bildung von immobilisierten Radikalen abgespalten werden, wodurch eine radikalische Propfpolymerisation, insbesondere eine lebende Atomtransferpolymerisation (ATRP) mit Alkenen gestartet werden kann.

Die lebende, kontrollierte Atomtransferpolymerisation zeichnet sich dadurch aus, dass die Konzentration freier Radikale durch Zusatz eines Übergangsmetallkomplexes und in Kombination mit einem Atomtransferprozess mit einer halogenorganischen Verbindung soweit erniedrigt wird, dass Kettenabbruchreaktionen weitestgehend zurückgedrängt werden. Unter einer lebenden Polymerisation versteht man Polymerisationen, für welche keine Abbruchsreaktion existiert. Unter "lebenden Bedingungen" wird die Kontrolle von Molmassen mit enger Verteilung möglich.

Die lebende, kontrollierte Atomtransferpolymerisation wird vorzugsweise in wässrig-alkoholischer Lösung durchgeführt, wobei der Alkohol bevorzugt ausgewählt ist aus der Gruppe Methanol, Ethanol, Propanol, Isopropanol, n-Butanol sowie Mischungen hiervon.

Die Reaktionstemperaturen bei der ATRP liegen vorzugsweise bei Temperaturen von 10 und 80 °C, bevorzugt von 20 und 50 °C.

Die ATRP erfolgt vorzugsweise unter Normaldruck.

Als Übergangsmetallkomplex bei der ATRP werden vorzugsweise Kupfer(I)-Komplexen, insbesondere CuBr, eingesetzt.

Bei der Atomtransferpolymerisation werden Polyacrylate, Polymethacrylate und andere Polyvinyle, die Schichten bilden, die die Bindung von Biopolymeren, vorzugsweise Proteinen, von Huminsäuren und von Mikroorganismen erschweren oder verhindern. Gerichtet bedeutet, dass die Polymerketten kontrolliert beginnend von oberflächeninitiierenden, kovalent gebundenen Halogenatomen, vorzugsweise Brom- und Chloratomen gerichtet von der zu modifizierenden Membranoberfläche weg aufpolymerisieren, also aufwachsen und sich auf diese Weise selbstorganisierend ausrichten, wobei die Dichte der so entstehenden Polymerbürsten über die Dichte und Anordnung der Halogenatome und die Polymerkettengeometrie bestimmt wird. Bei der ATRP schieben sich bei der Polymerisation die Monomermoleküle zwischen das Halogenatom und die wachsende Polymerkette, so dass ersteres sich stets am Ende der Polymerkette befindet und so die Richtung der Polymerisation vorgibt.
Bevorzugt werden als Monomere im zweiten Schritt des erfindungsgemäßen Verfahrens 2- Hydroxyethylmethacrylat (HEMA), 2-Methacryloyloxyethylphosphorylcholin (97%, MPC) oder [2-(Methacryloyloxy)ethyl]dimethyl-(3-sulfopropyl) ammoniumhydroxid oder Gemsiche dieser Verbindungen eingesetzt.
Als Initiatoren können im Allgemeinen brom- und chlororganische Verbindungen, vorzugsweise solche, bei denen die Halogenatome terminal an Alkylengruppen gebunden sind, verwendet werden, bevorzugt wird Ethyl-α-Bromoisobutyrat eingesetzt.
Vorzugsweise wird die primäre molekulare Funktionalisierung in der Gasphase bei Atmosphärendruck, insbesondere im Druckbereich von 100 bis 1000 mbar oder im Vakuum, insbesondere im Druckbereich von 0,01 mbar bis 100 mbar und Temperaturen im Bereich von 10 bis 150 °C, insbesondere von 20 bis 50 °C durchgeführt. Das Plasma kann durch eine Gleichspannungs-, Wechselspannungs- Hochfrequenz- oder Mikrowellentladung erzeugt oder als Elektronen-Cyclotron-Resonanz-Plasma ausgeführt werden.

Das Membranmaterial bzw. das Material der Membranoberfläche ist vorzugsweise ausgewählt aus der Gruppe bestehend aus einem Polyurethan, einem Polyamid oder einem Polyharnstoff. Diese Substratmaterialien weisen vorzugsweise eine überwiegend aromatische Struktur auf.

Erfindungsgemäß wird ebenso eine Dünnschichtkompositmembran mit mindestens einer Trennschicht mit einer Schichtdicke im Bereich von 10 bis 500 nm aus einem Polyamid, Polyurethan, Polyharnstoff oder Blends oder Mischungen hiervon, mindestens einer weiteren Polymerschicht sowie einer polymeren Trägerstruktur, bereitgestellt. Dabei weist die Trennschicht eine wie zuvor beschriebene Antifouling-Beschichtung auf. Bevorzugt besteht die Trennschicht aus einem aromatischen Polyamid.

Die Dünnschichtkompositmembran weist eine Trennschicht, vorzugsweise mit einer Dicke im Bereich von 50 bis 300 nm und mindestens eine weitere Polymerschicht mit einer Dicke im Bereich von 30 bis 100 µm und eine polymere Trägerstruktur mit einer Dicke im Bereich von 50 bis 100 µm auf.

Die mindestens eine Trennschicht ist bevorzugt mit einer terminalen Polymerkettendichte von 0,01 bis 2 Polymerketten, besonders bevorzugt von 0,05 bis 1 Polymerketten der durch kontrollierte Aufwachspolymerisation erzeugten Polyvinyle, Polyacrylate und/oder Polymethacrylate modifiziert, ohne dass die Trenneigenschaften und die Permeabilität der Dünnschichtkompositmembran um mehr als 20 % beeinträchtigt ist.

Die mindestens eine weitere Polymerschicht enthält oder besteht im Wesentlichen vorzugsweise aus Polysulfon, Poylethersulfon, Polyacrylnitril, Celluloseacetat, Polyimid, Polyetherimid oder Kombinationen dieser Polymere als Mischung oder Copolymerisat. Üblicherweise können aber auch andere assymetrische Membranen bildende Polymere eingesetzt werden. Bevorzugt besteht die mindestens eine weitere Polymerschicht aus Polysulfon oder Polyethersulfon.

Vorzugsweise besteht die mindestens eine Trägerstruktur aus einem Siebnetz, einem Gewebe, einer poröse Schicht oder aus Kombinationen hiervon. Diese können aus einem Polyester, einem Polyamid, einem Polyolefin oder einem anderen polymeren Fadenmaterial gebildet sein. Bevorzugt besteht das polymere Fadenmaterial aus einem Polyester. Bevorzugt ist die Trägerstruktur ein Siebnetz.

Verwendung finden die erfindungsgemäßen Membranen in der Wasseraufbereitung, insbesondere bei der Trinkwassererzeugung, Brauchwasserbereitstellung und Abwasserreinigung oder in der Lebensmittel- und Biotechnologie.

Die Vorteile, der gemäß des erfindungsgemäßen Verfahrens hergestellten Membranen, liegen in den guten Anti-Foulingeigenschaften bei hoher Trennleistung und Permeabilität. Es werden also durch das erfindungsgemäße Verfahren besonders haltbare und selektive Membranen bereitgestellt, so dass die Membranen nicht mehr so häufig ersetzt werden müssen und dadurch Kosten reduziert werden.

Anhand der nachfolgenden Beispiele soll der erfindungsgemäße Gegenstand näher erläutert werden, ohne diesen auf die hier dargestellten spezifischen Ausführungsformen einzuschränken.

### Beispiel 1

### Funktionalisierung durch Einführung bromhaltiger Molekülgruppen in der Gasphase

Für die Bromfunktionalisierung von Umkehrosmosemembranen im Niederdruckplasma wurden Allylbromid, Bromoform und 1-Brompropan angewendet. Die Umkehrosmosemembranen (für Brackwasser, High Rejection) wurden von der IAB Ionenaustauscher GmbH, LANXESS AG, zur Verfügung gestellt. Zur schonenden Bromfunktionalisierung der Membranoberfläche erfolgt die Abscheidung von bzw. Modifizierung mit den Bromkohlenwasserstoffen aus dem Niederdruckplasma. Die Membranproben wurden hierzu auf der unteren von zwei Plattenelektroden (Durchmesser: 150 mm, Abstand: 100 mm) fixiert und der Reaktionsraum dicht verschlossen. Allylbromid, Bromoform oder Brompropan wurden nach der Einstellung eines Unterdrucks von 0,1 Pa über ein Nadelventil eingeführt, bis der gewünschte Prozessdruck von 2 bis 4 Pa erreicht war. Die Zündung des Monomer-Gases erfolgte durch das Anlegen einer definierten Spannung im Bereich von 900-1100 V an beide Elektrodenplatten bei 50 Hertz. Die angegebene Prozesszeit entspricht der Dauer, für die eine Spannung angelegt wurde. Je 3 Membranproben einer Dünnschichtkompositmembran wurden mit Allylbromid, Bromoform bzw. Brompropan bei einer Spannung von 1100 V und einem Prozessdruck von 4 Pa modifiziert. Allylbromid (99%, AB) wurde von Alfa Aesar bezogen und wie erhalten verwendet. Die Prozessdauer betrug 5 Sekunden. Mittels Röntgenphotonenspektroskopie (XPS) konnte Brom an den so beschichteten bzw. behandelten Membranen nachgewiesen werden.

Tabelle 1 zeigt die oberflächennahe Elementzusammensetzung. Die Angaben erfolgten in Atomprozent [at%]. Die Abweichungen sind Standardabweichungen bei 9 Messpositionen auf 3 Parallelproben

**Tabelle 1:**

| **Probe** | **Br [at%]** | **C [at%]** | **N [at%]** | **O [at%]** |
|---|---|---|---|---|
| unbehandelt | - | 72,1 ± 0,41 | 10,4 ± 0,64 | 14,3 ± 0,65 |
| Allylbromid | 3,4 ± 1,18 | 73,0 ± 0,79 | 9,0 ± 0,88 | 11,4 ± 0,75 |
| Bromoform | 1,6 ± 0,28 | 66,1 ± 0,75 | 11,3 ± 0,60 | 17,9 ± 0,51 |
| Brompropan | 4,2 ± 0,62 | 71,6 ± 0,58 | 8,6 ± 0,78 | 12,3 ± 0,91 |

Auf 100 Atome kommen zwischen 1 und 5 Bromatome.

### Beispiel 2

### Radikalische Pfropfpolymerisation mit Atomtransfer nach der molekularen Funktionalisierung der Membranoberfläche

Der Aufwuchs von Oligomeren bzw. Polymeren auf der Membranoberfläche erfolgte durch radikalische Polymerisation mit Atomtransfer (Atom Transfer Radical Polymerisation, ATRP) unter Ausschluss von Sauerstoff. Der prinzipielle Ablauf des Verfahrens für die hier genannten Beispiele wird im Folgenden beschrieben. Kupfer(I)bromid (CuBr, Reinheit> 99,99%) und der Ligand 2,2'-Bipyridin (bpy, Reinheit" 99%, SigmaAldrich) wurden in der gewünschten Menge gemischt in einen Schlenkkolben überführt und durch wiederholtes Spülen mit Stickstoff entgast. Analog wurde das jeweils verwendete Monomer 2- Hydroxyethylmethacrylat (99+%, HEMA), 2-Methacryloyloxyethylphosphorylcholin (97%, MPC) oder [2-(Methacryloyloxy)ethyl]dimethyl-(3-sulfopropyl) ammoniumhydroxid (97%, SBMA) in einen weiteren Schlenkkolben überführt und entgast. Methanol (99,9% p.a.) und zweifach destilliertes Wasser wurden in je ein weiteres Gefäß abgefüllt und ebenfalls entgast. Anschließend wurden alle verwendeten Gefäße über eine Schleuse in eine Abzugsbox mit Argonatmosphäre (> 99%) überführt. Als nächster Schritt erfolgte die Herstellung von Reaktionslösung 1 durch das Lösen des CuBr und des bpy in Methanol. Nach dem vollständigen Lösen unter Rühren wird eine dunkelrote Reaktionslösung erhalten. Reaktionslösung 2 wurde durch das Lösen des Monomers in Wasser hergestellt. Reaktionslösung 1 wurde nun zu Reaktionslösung 2 gegeben und gründlich für etwa 30 Sekunden gerührt. Anschließend wurde der freie und gelöste Initiator Ethyl-α-Bromoisobutyrat (98%, EBIB) zu gegeben und die resultierende Lösung etwa 30 Sekunden gerührt. Die Lösung wird in einem speziell für die Membranmodifizierung ausgelegten Reaktionsgefäß vorgelegt. Die Membranproben wurden dann entweder lose gelagert oder in eine anders gestaltete Reaktionszelle eingespannt, welche die nur einseitige Kontaktierung rund ausgeschnittener Membranproben (Durchmesser ca. 75 mm) mit der Reaktionslösung ermöglichte. Eine Temperierung der Reaktion erfolgte durch die Überführung der Reaktionsgefäße in einen sich im Inneren der Abzugsbox befindenden Luftthermostaten, in dem die Temperatur zwischen 10 und 60°C eingestellt wurde. Nach Ablauf der Reaktionszeit wurden die Membranproben vorsichtig zunächst in einem Methanol-Wasser-Gemisch gemäß dem für die Reaktion verwendeten Verhältnis und anschließend in reinem Wasser gespült. Die Proben wurden anschließend getrocknet.

### Beispiel 2.1

Poly-2-hydroxyethylmethacrylat (Poly-HEMA) und Poly[2-(Methacryloyl-oxy)ethyl]dimethyl-(3-sulfopropan) (Poly-SBMA) wurden auf mit Allylbromid funktionalisierten Membranen aufpolymerisiert. Die Konzentrationen der Agenzien betrugen 50 mmol/L HEMA bzw. SBMA, 1 mmol/L EBIB, 1 mmol/L CuBr und 2 mmol/L bpy. Als Lösungsmittel wurde eine 9: 1-Mischung von Wasser mit Methanol verwendet. Die Reaktionsdauer betrug 1,5 h, 3 h und 20 h bei 20°C. Mittels XPS konnte eine Erhöhung des Sauerstoffgehalts (HEMA) bzw. des Schwefelgehalts (SBMA) der Membranoberfläche in Abhängigkeit von der Reaktionszeit gemessen werden.

Tabelle 2 zeigt die Oberflächenzusammensetzung ATRP-modifizierter Membranproben gemäß Beispiel 2.1. Die Angaben sind in Atomprozent [at%]. Die Abweichungen sind Standardabweichungen von auf 4 Messpositionen durchgeführten Analysen.

**Tabelle 2**

| **Probe** | **Br [at%]** | **C [at%]** | **N [at%]** | **O [at%]** | **S [at%]** |
|---|---|---|---|---|---|
| PHEMA1,5h | 0,2 ± 0,12 | 73,8 ± 0,35 | 8,9 ± 0,19 | 15,2 ± 0,19 | - |
| PHEMA 3 h | 0,1 ± 0,02 | 72,8 ± 0,26 | 7,3 ± 0,21 | 18,5 ± 0,37 | - |
| PHEMA 24 h | 0,2 ± 0,06 | 72,8 ± 0,12 | 6,6 ± 0,19 | 19,1 ± 0,17 | - |
| PSBMA 1,5 h | 0,6 ± 0,05 | 71,7 ± 0,76 | 8,8 ± 0,39 | 15,5 ± 0,54 | 2,2 ± 0,13 |
| PSBMA 3 h | 0,5 ± 0,04 | 70,2 ± 0,34 | 7,8 ± 0,50 | 17,6 ± 0,77 | 2,9 ± 0,34 |
| PSBMA 24 h | 0,5 ± 0,06 | 67,8 ± 0,39 | 4,6 ± 0,21 | 22,1 ± 0,30 | 22,1 ± 0,30 |

### Beispiel 2.2

Poly-2-Methacryloyloxyethylphosphorylcholin (Poly-MPC) wurde auf mit Bromoform (BF) oder Brompropan (BP) funktionalisierten Membranen aufpolymerisiert. Es wurden 50 mmol/L MPC, 1 mmol/L EBIB, 1 mmol/L CuBr und 2 mmol/L bpy angesetzt. Als Lösungsmittel wurde eine 1:1-Mischung aus Wasser und Methanol verwendet. Die Reaktionsdauer betrug 2 h bei 20°C.

Mittels XPS konnte eine Erhöhung des Phosphorgehalts der Membranoberfläche, die mit der Menge der aufpolymerisierten Monomeren korreliert, nachgewiesen werden. Da die Flächenkonzentration der zugänglichen Initialisierungsgruppen annähernd konstant bleibt, kann über die Menge des gebundenen Phosphors auch auf den mittleren Polymerisationsgrad geschlossen werden.

Tabelle 3 zeigt die Oberflächenzusammensetzung ATRP-modifizierter Membranproben gemäß Beispiel 2.2. Die Angaben sind in Atomprozent [at%]. Die Abweichungen sind Standardabweichungen von auf 3 Messpositionen durchgeführten Analysen.

**Tabelle 3**

| **Probe** | **Br [at%]** | **C [at%]** | **N [at%]** | **O [at%]** | **S [at%]** |
|---|---|---|---|---|---|
| PMPC (BF) | 1,1 ± 0,09 | 66,3 ± 0,94 | 7,9 ± 0,66 | 21,3 ± 0,04 | 2,5 ± 0,07 |
| PMPC(BP) | 1,6 ± 0,19 | 68,9 ± 0,48 | 7,0 ± 0,52 | 19,2 ± 1,01 | 2,2 ± 0,11 |

### Beispiel 2.3

Poly-SBMA wurde auf mit Allylbromid funktionalisierten Membranen aufpolymerisiert. Es wurden 50 mmol/L SBMA, 1 mmol/L EBIB, 1 mmol/L CuBr und 2 mmol/L bpy eingesetzt. Zusätzlich wurden der Reaktionslösung 20 mmol/L Glucose als Reduktionsmittel zugefügt. Als Lösungsmittel wurde eine 1: 1-Mischung aus Wasser und Methanol verwendet. Die Reaktionsdauer betrug 20 h. Die Reaktionstemperatur betrug 20°C, 35 °C oder 50°C. Mittels XPS konnte eine Erhöhung des Schwefelgehalts der Membranoberfläche in Abhängigkeit von der Reaktionstemperatur nachgewiesen werden, womit ein Maß für das erreichte Molekulargewicht der aufgepfropften Polymerketten gegeben war.

Tabelle 4 zeigt die Oberflächenzusammensetzung ATRP-modifizierter Membranproben gemäß Beispiel 2.3. Die Angaben sind in Atomprozent [at%]. Die angegebenen Standardabweichungen ergeben sich aus den bei 3 Positionen auf der Membranoberfläche gemessenen Werten.

**Tabelle 4**

| **Probe** | **Br [at%]** | **C [at%]** | **N [at%]** | **O [at%]** | **S [at%]** |
|---|---|---|---|---|---|
| PSBMA (20°C) | 1,2 ± 0,02 | 68,2 ± 0,23 | 5,4 ± 0,11 | 21,3 ± 0,19 | 3,9 ± 0,05 |
| PSBMA (35°C) | 1,1 ± 0,06 | 66,6 ± 0,23 | 4,7 ± 0,07 | 23,8 ± 0,18 | 4,5 ± 0,12 |
| PSBMA (50°C) | 0,4 ± 0,32 | 67,0 ± 1,10 | 4,9 ± 0,14 | 22,S ± 0,81 | 5,2 ± 0,60 |

## Patentansprüche

1. Verfahren zur Herstellung von Antifouling-Beschichtungen von Dünnschichtkompositmembranen für die Umkehrosmose, Nanofiltration und die Ultrafiltration, bei dem
• in einem ersten Schritt eine primäre molekulare Funktionalisierung der Membran in der Gasphase durch plasmachemische und/oder photochemische Aktivierung mindestens einer in die Gasphase überführbaren halogenorganischen Verbindung ausgewählt aus der Gruppe bestehend aus Allylhalogeniden, C1-bis C8-Alkylenhalogeniden, C1- bis C8-Alkylhalogeniden und Mischungen hiervon und deren kovalente Anbindung an die Membranoberfläche durchgeführt wird und
• in einem zweiten Schritt eine nasschemische Modifizierung der funktionalisierten Membran mittels radikalischer Pfropfpolymerisation erfolgt, wobei durch die radikalische Pfropfpolymerisation Polyacrylate, Polymethacrylate und andere Polyvinyle, die Schichten bilden, die die Bindung von Biopolymeren, von Huminsäuren und von Mikroorganismen erschweren oder verhindern, beginnend an auf der Membranoberflächen gebundenen funktionellen Gruppen aufwachsen.

2. Verfahren nach Anspruch 1,
**dadurch gekennzeichnet, dass** die mindestens eine halogenorganische Verbindung ausgewählt ist aus der Gruppe bestehend aus C₁- bis C₄-Alkylenhalogeniden, insbesondere Methylenhalogeniden, C₁- bis C₄-Alkylhalogeniden, insbesondere Methylhalogeniden, und Mischungen hiervon, bevorzugt Propylbromid, Ethylbromid, Allylbromid, Allylchlorid, Methylenbromid, Methylenchlorid, Methylbromid, Methylchlorid sowie Mischungen hiervon.

3. Verfahren nach einem der vorhergehenden Ansprüche, **dadurch gekennzeichnet, dass** die kovalente Anbindung über Alkylenbrücken erfolgt.

4. Verfahren nach einem der vorhergehenden Ansprüche, **dadurch gekennzeichnet, dass** die primäre molekulare Funktionalisierung in der Gasphase bei Atmosphärendruck, insbesondere im Druckbereich von 100 bis 1000 mbar oder im Vakuum im Druckbereich von 0,01 bis 100 mbar, und Temperaturen im Bereich von 20 bis 150 °C, höchstens jedoch bis zur Zersetzungstemperatur der Polymermembranschicht, insbesondere im Bereich von 20 bis 40 °C erfolgt.

5. Verfahren nach einem der vorhergehenden Ansprüche,
**dadurch gekennzeichnet, dass** die plasmachemische Behandlung mit einer Gleichspannungs-, Wechselspannungs-, Hochfrequenz- oder Mikrowellenentladung oder einem Elektron-Cyklotron-Resonanz-Plasma (ECR) erfolgt.

6. Verfahren nach einem der vorhergehenden Ansprüche, **dadurch gekennzeichnet, dass** die Halogenatome der halogenorganischen Verbindungen photochemisch oder durch die katalytische Wirkung, vorzugsweise von Cu(I)-, und Cu(II)-Komplexen sowie von Ru(III)-Komplexen mit ausgewählten Liganden vorzugsweise mehrzähnigen Liganden, vorzugsweise mehrzähnigen Amin- und Pyridinliganden unter Bildung von immobilisierten Radikalen abgespalten werden.

7. Verfahren nach dem vorhergehenden Anspruch, **dadurch gekennzeichnet, dass** ausgehend von den kovalent gebundenen Halogenatomen immobilisierte Radikale entstehen, von denen ausgehend eine radikalische Propfpolymerisation, insbesondere eine lebende, kontrollierte Atomtransferpolymerisation mit Alkenen gestartet wird, wobei vorzugsweise in wässrig-alkoholischer Lösung bei Temperaturen zwischen 10 und 80 °C, bevorzugt zwischen 20 und 50 °C, unter Normaldruck und in Gegenwart von Kupfer(I)-Komplexen gearbeitet wird.

8. Verfahren nach dem vorhergehenden Anspruch, wobei die auf der Membranoberläche gebundenen funktionellen Gruppen Halogenatome aufweisen.

9. Verfahren nach einem der vorhergehenden Ansprüche, **dadurch gekennzeichnet, dass** die Membran eine zu modifizierende Membranoberfläche aufweist und zumindest die zu modifizierende Membranoberfläche aus einem Polyamid, Polyurethan oder einem Polyharnstoff, jeweils vorzugsweise mit einer aromatischen Struktur, und deren Verbundmaterialien besteht.

10. Dünnschichtkompositmembran mit
• mindestens einer Trennschicht mit einer Schichtdicke im Bereich von 10 bis 500 nm aus einem Polyamid, Polyurethan oder einem Polyharnstoff
• mindestens einer weiteren Polymerschicht sowie
• einer polymeren Trägerstruktur,
wobei die Trennschicht eine Antifouling-Beschichtung herstellbar nach einem der vorhergehenden Ansprüche aufweist.

11. Dünnschichtkompositmembran nach Anspruch 10, **dadurch gekennzeichnet, dass** die Trennschicht eine Dicke im Bereich von 50 bis 300 nm und/oder die mindestens eine weitere Polymerschicht eine Dicke im Bereich von 30 bis 100 µm und/oder die polymere Trägerstruktur eine Dicke im Bereich von 50 bis 100 µm aufweist.

12. Dünnschichtkompositmembran nach Anspruch 10 oder 11, **dadurch gekennzeichnet, dass** die mindestens eine Trennschicht mit einer terminalen Polymerkettendichte zwischen 0,01 und 5 Polymerketten pro Quadratnanometer, vorzugsweise zwischen 0,1 und 2 Polymerketten pro Quadratnanometer der durch kontrollierte Aufwachspolymerisation erzeugten Polyvinyl-, Polyacrylat- und/oder Polymethacrylate modifiziert ist.

13. Dünnschichtkompositmembran nach einem der Ansprüche 10 bis 12, **dadurch gekennzeichnet, dass** die mindestens eine weitere Polymerschicht Polysulfon, Polyethersulfon, Polyacrylnitril, Celluloseacetat, Polyimid, Polyetherimid oder Kombinationen dieser Polymere als Mischung oder Copolymerisat enthält.

14. Dünnschichtkompositmembran nach einem der Ansprüche 10 bis 13, **dadurch gekennzeichnet, dass** die mindestens eine Trägerstruktur aus einem Siebnetz, einem Gewebe, einer poröse Schicht oder aus Kombinationen hiervon besteht.

15. Verwendung der Dünnschichtkompositmembran nach einem der Ansprüche 10 bis 14 in der Wasseraufbereitung, insbesondere bei der Trinkwassererzeugung, Brauchwasserbereitstellung und Abwasserreinigung oder in der Lebensmittel- und Biotechnologie durch Umkehrosmose und Nanofiltration.

## Claims

1. A method for the preparation of antifouling coatings of thin film composite membranes for reverse osmosis, nanofiltration, and ultrafiltration, in which,
• in a first step, a primary molecular functionalization of the membrane in the gas phase is carried out by plasma-chemical and/or photochemical activation of at least one halogen-organic compound which is convertible into the gas phase selected from the group comprising allyl halogenides, C1 to C8 alkylene halogenides, C1 to C8 alkyl halogenides, and mixtures thereof and their covalent binding to the membrane surface; and,
• in a second step, a wet-chemical modification of the functionalized membrane takes place by radical graft polymerization, wherein polyacrylates, polymethacrylates, and other polyvinyls that form films that make the bonding of biopolymers, of humic acids, and of microorganisms more difficult or that prevent it grow starting at functional groups bonded to the membrane surfaces.

2. The method of claim 1, **characterized in that** the at least one halogen organic compound is selected from the group comprising C₁- to C₄-alkylene halogenides, in particular methylene halogenides, C₁ to C₄ alkyl halogenides, in particular methyl halogenides, and mixtures thereof, preferably propyl bromide, ethyl bromide, allyl bromide, allyl chloride, methylene bromide, methylene chloride, methyl bromide, methyl chloride, and mixtures thereof.

3. The method of one of the preceding claims, **characterized in that** the covalent bonding takes place over alkylene bridges.

4. The method of one of the preceding claims, **characterized in that** the primary molecular functionalization takes place in the gas phase at atmospheric pressure, in particular in a pressure range of 100 to 1000 mbar, or in a vacuum in the pressure range of 0.01 to 100 mbar and at temperatures in the range of 20 to 150° C. but at most up to the decomposition temperature of the polymer membrane layer, in particular in the range of 20 to 40°C.

5. The method of one of the preceding claims, **characterized in that** the plasma-chemical treatment takes place using a direct voltage discharge, an alternating voltage discharge, a high frequency discharge, or a microwave discharge or using an electron cyclotron resonance plasma (ECR).

6. The method of one of the preceding claims, **characterized in that** the halogen atoms of the halogen organic compounds are split off photochemically or by the catalytic effect, preferably of Cu(I) and Cu (II) complexes, and of Ru(III) complexes with selected ligands, preferably with multi-tooth ligands, preferably multi-tooth amine ligands and pyridine ligands, while forming immobilized radicals.

7. The method of the preceding claim, **characterized in that**, starting from the covalently bonded halogen atoms, immobilized radicals are produced, starting from which a radical graft polymerization, in particular a living, controlled atom transfer polymerization with alkenes is started, with work preferably being carried out in an aqueous alcoholic solution at temperatures between 10 and 80°C, preferably between 20 and 50°C, under normal pressure and in the presence of copper(I) complexes.

8. The method of the preceding claim, wherein the functional groups bonded on the membrane surface comprise halogen atoms.

9. The method of one of the preceding claims, **characterized in that** the membrane comprises a membrane surface to be modified and comprises at least the membrane to be modified composed of a polyamide, a polyurethane, or a polyurea, in each case preferably having an aromatic structure, and their composite materials.

10. A thin film composite membrane comprising
• at least one separating layer having a layer thickness in a range of 10 to 500 nm composed of a polyamide, a polyurethane, or a polyurea;
• at least one further polymer layer; and
• a polymeric carrier structure, wherein
the separating layer has an antifouling coating that can be prepared in accordance with one of the preceding claims.

11. The thin film composite membrane of claim 10, **characterized in that** the separating layer has a thickness in a range of 50 to 300 nm; and/or **in that** the at least one further polymer layer has a thickness in the range of 30 to 100 µm; and/or **in that** the polymeric carrier structure has a thickness in the range of 50 to 100 µm.

12. The thin film composite membrane of claim 10 or claim 11, **characterized in that** the at least one separating layer is modified by a terminal polymer chain density between 0.01 and 5 polymer chains per square nanometer, preferably between 0.1 and 2 polymer chains per square nanometer, of the polyvinyl s, polyacrylates, and/or polymethacrylates produced by controlled growth polymerization.

13. The thin film composite membrane of one of the claims 10 to 12, **characterized in that** the at least one further polymer layer comprises polysulfone, polyether sulfone, polyacrylonitrile, cellulose acetate, polyimide, polyether imide, or combinations of these polymers as a mixture or copolymerizate.

14. The thin film composite membrane of one of the claims 10 to 13, **characterized in that** the at least one carrier structure comprises a screen mesh, a fabric, a porous layer, or combinations thereof.

15. Use of a thin film composite membrane of one of the claims 10 to 14 in water preparation, in particular in drinking water production, industrial water preparation, and waste water treatment, or in food technology and biotechnology by reverse osmosis and nanofiltration.

## Revendications

1. Procédé de fabrication de revêtements antisalissure de membranes composites à couches minces destinées à l'osmose inverse, la nanofiltration et l'ultrafiltration, dans lequel
- dans une première étape, on procède à une fonctionnalisation moléculaire primaire de la membrane en phase gazeuse par activation plasmachimique et/ou photochimique d'au moins un composé organohalogéné pouvant passer en phase gazeuse, choisi dans le groupe consistant en les halogénures d'allyle, les halogénures d'alkylène en C1 à C8, les halogénures d'alkyle en C1 à C8 et les mélanges de ceux-ci, puis leur liaison covalente à la surface de la membrane, et
- dans une deuxième étape, on procède à une modification chimique par voie humide de la membrane fonctionnalisée, à l'aide d'une polymérisation radicalaire par greffage ; sous l'effet de la polymérisation radicalaire par greffage, des polyacrylates, des polyméthacrylates et d'autres composés polyvinyliques formant des couches qui rendent difficile ou empêchent la liaison de biopolymères, d'acides humiques et de microorganismes, présentant alors une croissance, en commençant par les groupes fonctionnels liés à la surface de la membrane.

2. Procédé selon la revendication 1, **caractérisé en ce que** le ou les composés organohalogénés sont choisis dans le groupe consistant en les halogénures d'alkylène en C₁ à C₄, en particulier les halogénures de méthylène, les halogénures d'alkyle en C₁ à C₄, en particulier les halogénures de méthyle, et les mélanges de ceux-ci, de préférence le bromure de propyle, le bromure d'éthyle, le bromure d'allyle, le chlorure d'allyle, le bromure de méthylène, le chlorure de méthylène, le bromure de méthyle, le chlorure de méthyle, ainsi que les mélanges de ceux-ci.

3. Procédé selon l'une des revendications précédentes, **caractérisé en ce que** la liaison covalente est réalisée par l'intermédiaire de ponts alkylène.

4. Procédé selon l'une des revendications précédentes, **caractérisé en ce que** la fonctionnalisation moléculaire primaire a lieu en phase gazeuse sous la pression atmosphérique, en particulier dans la plage de pressions de 100 à 1000 mbar, ou sous vide, dans la plage de pressions de 0,01 à 100 mbar, et à des températures comprises dans la plage de 20 à 150 °C, au plus cependant jusqu'à la température de décomposition de la couche de membrane polymère, en particulier dans la plage de 20 à 40 °C.

5. Procédé selon l'une des revendications précédentes, **caractérisé en ce que** le traitement plasmachimique est réalisé par une décharge en tension continue, en tension alternative, en haute fréquence ou micro-ondes, ou avec un plasma de résonance cyclotronique électronique (ECR).

6. Procédé selon l'une des revendications précédentes, **caractérisé en ce que** les atomes d'halogène des composés organohalogénés sont dissociés par voie photochimique ou par une action catalytique, de préférence de complexes de Cu(I) et de Cu(II) ainsi que de complexes de Ru(III), à l'aide de ligands sélectionnés, de préférence des ligands multidentés, de préférence des ligands multidentés de type amine et pyridine, avec formation de radicaux immobilisés.

7. Procédé selon la revendication précédente, **caractérisé en ce que**, à partir des atomes d'halogène liés par liaison covalente, il y a création de radicaux immobilisés, à partir desquels une polymérisation radicalaire par greffage, en particulier une polymérisation contrôlée vivante par transfert d'atomes est amorcée avec les alcènes, ce à l'occasion de quoi on travaille de préférence dans une solution hydroalcoolique à des températures comprises entre 10 et 80 °C, de préférence entre 20 et 50 °C sous la pression normale et en présence de complexes de cuivre(I).

8. Procédé selon la revendication précédente, dans lequel les groupes fonctionnels liés à la surface de la membrane comprennent des atomes d'halogène.

9. Procédé selon l'une des revendications précédentes, **caractérisé en ce que** la membrane présente une surface de membrane à modifier, et au moins la surface de membrane à modifier est constituée d'un polyamide, d'un polyuréthanne ou d'une polyurée, chacun ayant de préférence une structure aromatique, et des matériaux composites de ceux-ci.

10. Membrane composite à couches minces, comprenant :
- au moins une couche de séparation ayant une épaisseur de couche comprise dans la plage de 10 à 500 nm, en un polyamide, un polyuréthanne ou une polyurée,
- au moins une couche polymère supplémentaire, ainsi que
- une couche support polymère,
la couche de séparation présentant un revêtement antisalissure, pouvant être fabriqué selon l'une des revendications précédentes.

11. Membrane composite à couches minces selon la revendication 10, **caractérisée en ce que** la couche de séparation présente une épaisseur comprise dans la plage de 50 à 300 nm et/ou la ou les couches polymères supplémentaires présentent une épaisseur comprise dans la plage de 30 à 100 µm et/ou la structure support polymère présente une épaisseur comprise dans la plage de 50 à 100 µm.

12. Membrane composite à couches minces selon la revendication 10 ou 11, **caractérisée en ce que** la ou les couches de séparation sont modifiées par une densité de chaînes polymères terminales comprise entre 0,01 et 5 chaînes polymères par nanomètre carré, de préférence entre 0,1 et 2 chaînes polymères par nanomètre carré des composés polyvinyliques, des polyacrylates et/ou des polyméthacrylates produits par polymérisation par croissance contrôlée.

13. Membrane composite à couches minces selon l'une des revendications 10 à 12, **caractérisée en ce que** la ou les couches polymères supplémentaires contiennent de la polysulfone, de la polyéthersulfone, du polyacrylonitrile, de l'acétate de cellulose, du polyimide, du polyétherimide ou des combinaisons de ces polymères, sous forme d'un mélange ou d'un copolymère.

14. Membrane composite à couches minces selon l'une des revendications 10 à 13, **caractérisée en ce que** la ou les structures supports sont constituées d'un tamis, d'un tissu, d'une couche poreuse ou d'une combinaison de ceux-ci.

15. Utilisation de la membrane composite à couches minces selon l'une des revendications 10 à 14 pour le traitement de l'eau, en particulier pour la production d'eau potable, pour la préparation d'eau industrielle ou pour la purification des eaux usées, ou dans la technologie alimentaire et en biotechnologie, par osmose inverse et nanofiltration.
